# EUROPÄISCHE PATENTSCHRIFT

(11) **EP 1 217 233 B1**
(45) Veröffentlichungstag und Bekanntmachung des Hinweises auf die Patenterteilung: **05.07.2006**
(21) Anmeldenummer: 01130137.1
(22) Anmeldetag: 19.12.2001
(51) Int. Cl.: F16C 7/00, F16C 11/06

(54) **Verbindungsstück zum gelenkigen Verbinden von im Fahrwerk eines Kraftfahrzeuges angeordneten Bauelementen**
Connecting rod for connecting elements to a chassis of an automotive vehicle
Bielle pour relier des éléments constructifs au chassis d'un véhicule automobile

(30) Priorität: 20.12.2000 DE 10063928
(43) Veröffentlichungstag der Anmeldung: 26.06.2002
(73) Patentinhaber: ZF Lemförder Metallwaren AG, 49448 Lemförde (DE)
(72) Erfinder: Nachbar, Frank, 49448 Lemförde (DE); Behre, Matthias, 49451 Holdorf (DE); Lamla, Dirk, 49565 Bramsche (DE); Grube, Volker, 49356 Diepholz (DE)

(56) Entgegenhaltungen:
- EP-A- 0 690 242
- EP-A- 0 832 769
- FR-A- 2 292 153
- GB-A- 997 836
- US-A- 3 037 787
- US-A- 4 993 863
- US-A- 5 313 697
- US-A- 5 947 627

## Beschreibung

Die Erfindung betrifft ein Verbindungsstück zum gelenkigen Verbinden von im Fahrwerk eines Kraftfahrzeuges angeordneten Bauelementen.

Derartige Verbindungsstücke sind aus dem Stand der Technik bekannt und werden je nach Einsatzbereich unter anderem als Pendelstützen oder als Querlenker verwendet.

Die US 5,947,627, die dem Oberbegriff des vorliegenden Ansprüchs 1 entspricht, beschreibt ein Verbindungsstück zum gelenkigen Verbinden von im Fahrwerk eines Kraftfahrzeuges angeordneten Bauelementen, mit einem in zwei Endbereiche und in einen zwischen diesen liegenden Mittelbereich unterteilten, lang gestreckten Metallkörper, wobei zumindest einer der Endbereiche einen gegenüber dem Mittelbereich wenigstens bereichsweise abweichenden Querschnitt aufweist. An diesen Endbereichen ist jeweils ein ein Kunststoffgehäuse aufweisendes Gelenk angeordnet, das mit dem Endbereich formschlüssig verbunden ist, wobei die formschlüssige Verbindung ausschließlich zwischen der Außenfläche des Endbereichs und dem Kunststoffgehäuse gebildet und der Endbereich stirnseitig vollständig und materialhomogen geschlossen ausgeführt ist.

Aus der EP 0 832 769 A2 ist ferner ein Verbindungsstück zum gelenkigen Verbinden von im Fahrwerk eines Kraftfahrzeuges angeordneten Bauelementen, mit einem in zwei Endbereiche und in einen zwischen diesen liegenden Mittelbereich unterteilten, lang gestreckten Körper aus Vollmaterial bekannt, wobei zumindest einer der Endbereiche einen gegenüber dem Mittelbereich wenigstens bereichsweise abweichenden Querschnitt aufweist. Ein Gelenk, das mit dem Endbereich formschlüssig verbunden ist, weist ein Kunststoffgehäuse auf, wobei die formschlüssige Verbindung ausschließlich zwischen der Außenfläche des Endbereichs und dem Kunststoffgehäuse gebildet und der Endbereich stirnseitig vollständig und materialhomogen geschlossen ausgeführt ist.
Der Mittelbereich wird bei dieser Lösung ebenso wie der Endbereich aus dem gleichen Werkstoff hergestellt, sodass insofern Materialhomogenität gegeben ist. Als nachteilig hat sich dabei jedoch erwiesen, dass ein aus Kunststoff bestehender Mittelbereich nur geringere Kräfte übertragen kann, als ein metallischer Mittelbereich.

Aus der US 5 615 967 ist weiterhin ein Kugelgelcnkverbindungsstück bekannt, welches ein Metallrohr aufweist, an dessen beiden Enden jeweils ein Kugelgelenk angeordnet ist. Da beide Kugelgelenke identisch aufgebaut sind, wird im Folgenden die Beschreibung der Kugelgelenke und deren Anbindung an das Rohr auf ein einziges der Kugelgelenke beschränkt: Das Kugelgelenk weist ein mit einer Ausnehmung versehenes fäserverstärktes Kunststoffgehäuse mit einem teilweise in dieser angeordneten Kugelzapfen auf, und im Inneren des Rohrs ist ein Kunststoffstopfen eingesetzt, der gegen eine im Rohr vorgesehene Innenschulter fixiert ist. Die Innenschulter ist durch die Ausbildung einer Radialnut in der äußeren Mantelfläche des Rohres realisiert und derart weit von der Stirnseite des Rohres entfernt, dass der Kunststoffstopfen zu dieser einen Abstand aufweist. Dadurch ist eine zylindrische Kammer im Rohr ausgebildet, deren Boden durch den Kunststoffstopfen gebildet ist. Stirnseitig ist das Rohr nach innen umgebogen, so dass der umgebogene Bereich des Rohres einen mittig mit einer Öffnung versehenen Deckel für die zylindrische Kammer bildet. Zum Befestigen des Kugelgelenkgehäuses ist die Kammer vollständig mit Kunststoff gefüllt, der mit dem Kugelgelenkgehäuse eine Einheit bildet. Ferner umschließt das Kugelgelenkgehäuse den äußeren Endbereich des Rohres und greift dabei auch in die für die Ausbildung der Innenschulter vorgesehene Nut ein.

Diese Art der Anbindung des Kugelgelenks an das Rohr ist sehr aufwendig. Insbesondere muss zunächst eine Innenschulter im Rohr ausgebildet werden, wonach der Stopfen in das Rohr einzusetzen ist. Dann wird das Rohr stirnseitig umgebogen, so dass erst danach zum Beispiel unter Anwendung des Spritzgussverfahrens das Kugelgelenkgehäuse gebildet bzw. an das Rohr angebunden werden kann.

Der Erfindung liegt die Aufgabe zugrunde, ein Verbindungsstück zum gelenkigen Verbinden unterschiedlicher Bauelemente zu schaffen, dessen Herstellung vereinfacht und damit kostengünstiger zu realisieren ist.

Diese Aufgabe wird erfindungsgemäß durch ein Verbindungsstück zum gelenkigen Verbinden von im Fahrwerk eines Kraftfahrzeuges angeordneten Bauelementen mit den Merkmalen des unabhängigen Patentanspruchs 1 gelöst. Bevorzugte Weiterbildungen sind in den Unteransprüchen beschrieben.

Zur Lösung dieser Aufgabenstellung wird vargeschlagen, ein Verbindungsstück nach dem Oberbegriff des Patentanspruches 1 dahingehend weiterzubilden, dass der lang gestreckte Metallkörper aus einem Rohr hergestellt ist, wobei zumindest ein Ende des Rohres zum Ausbilden des Endbereichs zu einem Flachprofil verformt wird, in welchem ein durchgehendes Loch vorgesehen ist zur Aüfnahme des Gelenkes.
Bevorzugt ist das Rohr an zumindest einem seiner Enden zum Ausbilden des ersten Endbereichs verformt bzw. zusammengedrückt. Durch die Verformung des Rohres im Endbereich ist dieses stirnseitig vollständig geschlossen, wobei der Endbereich, bis auf einen Übergangsbereich, einen ebenen, scheibenähnlichen Körper bildet, der nachfolgend als Flachprofil bezeichnet wird. Dieses Flachprofil weist zumindest bereichsweise eine Ausdehnung auf, die über die Ausdehnung des Rohrs hinausgeht, so dass der Formschluss über die Außenkontur des Flachprofils gewährleistet werden kann.
Durch die Ausbildung des Loches wird zum einen die formschlüssigVerbindung unerstützt, zum anderen wird das Flachprofil durch dieses Loch zu einer ringförmigen Struktur umgebildet, die gemäß einer Ausführungsform als integrierte Versteifung bzw. Verstärkung des Gelenkgehäuses dient.

Da der Endbereich des erfindungsgemäßen Verbindungsstücks stirnseitig materialhomogen geschlossen ist, ist auch kein Kunststoffstopfen mehr erforderlich, der in das Rohr gegen eine Innenschulter gebracht werden muss. Somit entfällt zum einen der Aufwand für die Herstellung des Kunststoffstopfens und zum anderen der Herstellungsschritt des Einschiebens des Kunststoffstopfens in das Innere des Rohres. Hierdurch ist die Herstellung vereinfacht und kostengünstiger realisierbar. Da ferner der Endbereich des erfindungsgemäßen Verbindungsstücks stirnseitig vollständig geschlossen ist, ist auch kein Material von dem Gelenkgehäuse in das Innere des Verbindungsstücks eingebracht, was zu einer Materialeinsparung und somit ebenfalls zu einer Kostenreduzierung führt.

Die erfindungsgemäße Verbindungsvorrichtung weist aufgrund der Kombination von Kunststoff- und Metallkomponenten eine geringere Masse als eine herkömmliche Verbindungsvorrichtung auf, bei der neben dem langgestreckten Metallkörper auch das Gelenkgehäuse aus Metall hergestellt ist, so dass mit der erfindungsgemäßen Verbindungsvorrichtung eine Gewichtseinsparung und somit auch eine Reduzierung des Kraflstoffverbrauchs erzielt werden kann.

Das Gelenk kann als Gummigelenk ausgelegt sein, wobei ein Gelenkzapfen über ein Elastomer mit dem Kunststoffgehäuse verbunden ist. Derartige Gummigelenke weisen ein geringes Gewicht auf und sind kostengünstig herzustellen. Bevorzugt ist das Gelenk jedoch als Kugelgelenk ausgebildet, da Kugelgelenke im Vergleich zu Gummigelenken im Allgemeinen eine höhere Lebensdauer aufweisen, eine größere Kraftaufnahme erlauben und einem geringeren Verschleiß unterliegen.

Das Kunststoffgehäuse des Gelenks kann mehrteilig ausgebildet sein, wobei die unterschiedlichen Teile beim Zusammenbau des Gelenks über Kunststoffschnappverbindungen oder über Kunststoffschweißen miteinander verbunden werden. Bevorzugt ist das Gehäuse aber als einstückiges Kunststoffspritzteil ausgebildet, welches durch Umspritzen des Endbereichs ausgebildet wird.

Der langgestreckte Metallkörper kann einen beliebigen Querschnitt aufweisen, wobei der Metallkörper insbesondere aus Aluminium oder Stahl hergestellt ist.

Ist der Metallkörper als Rohr ausgebildet, so kann der Endbereich zum Beispiel durch einen einstückig mit dem Rohr ausgebildeten und aus dem gleichen Material wie dieses hergestellten Deckel stirnseitig geschlossen sein.

Der andere der beiden Endbereiche kann in herkömmlicher Art und Weise ausgestaltet sein. Bevorzugt sind jedoch beide Endbereiche in gleicher Weise ausgebildet, wobei der andere Fndbercich mit einem zweiten ein Kunststoffgehäuse aufweisenden Gelenk formschlüssig verbunden ist Dadurch werden der Herstellungsaufwand, die Herstellungskosten und das Gewicht für das Verbindungsstück noch weiter reduziert.

Ist der langgestreckte Metällkörper an jedem seiner beiden Endbereiche zu einem Flachprofil umgeformt und mit einem Gelenk versehen, so können die beiden Flachprofile in einer gemeinsamen Ebene liegen. Hierbei sind die beiden Gelenke entweder parallel oder um 180° gegenüber der Längsachse des Metallkörpers zueinander verdreht ausgerichtet. Da im Fahrzeug aber häufig Bauelemente miteinander verbunden werden müssen, die in unterschiedlichen Richtungen verlaufend angeordnet sind, sind die den beiden Endbereichen zugeordneten Flachprofile bevorzugt gegeneinander um die Längsachse des Metallkörpers verdreht angeordnet. Somit sind die durch die beiden Flachprofile definierten Ebenen weder identisch, noch verlaufen sie parallel zueinander. Mit dieser Ausgestaltung lassen sich nun Bauelemente miteinander verbinden, deren Anschlussstellen für das Verbindungsstück gegeneinander verdreht sind.

Die erfindungsgemäße Verbindungsvorrichtung kann zum Beispiel als Spurstange, als Spurstangenkopf oder als Querlenker ausgelegt sein, welcher einerseits mit dem Fahrzeugaufbau und andererseits mit einem der Räder bzw. Radträger verbunden ist. Bevorzugt ist das Verbindungsstück aber als Pendelstütze ausgebildet, welche einerseits mit dem Ende eines Stabilisators und andererseits mit einem diesem Ende zugeordneten Radträger verbunden ist. Dabei muss die Pendelstütze nicht unmittelbar mit dem Radträger verbunden sein, sondern kann auch mit diesem über einen an dem Radträger befestigten Lenker mittelbar verbunden sein.

Die Erfindung wird nachfolgend anhand einer bevorzugten Ausführungsform unter Bezugnahme auf die Zeichnung beschrieben. In der Zeichnung zeigen:
- Figur 1: eine Seitenansicht einer Ausführungsform des erfindungsgemäßen Verbindungsstücks,
- Figur 2: eine Seitenansicht des langgestreckten Metallkörpers gemäß der Ausführungsform,
- Figur 3: eine teilweise im Schnitt dargestellte Draufsicht auf die erste Ausführungsform und
- Figur 4: eine teilweise im Schnitt dargestellte Draufsicht auf eine zweite, nicht erfindungsgemäße Ausführungsform des Verbindungsstücks.

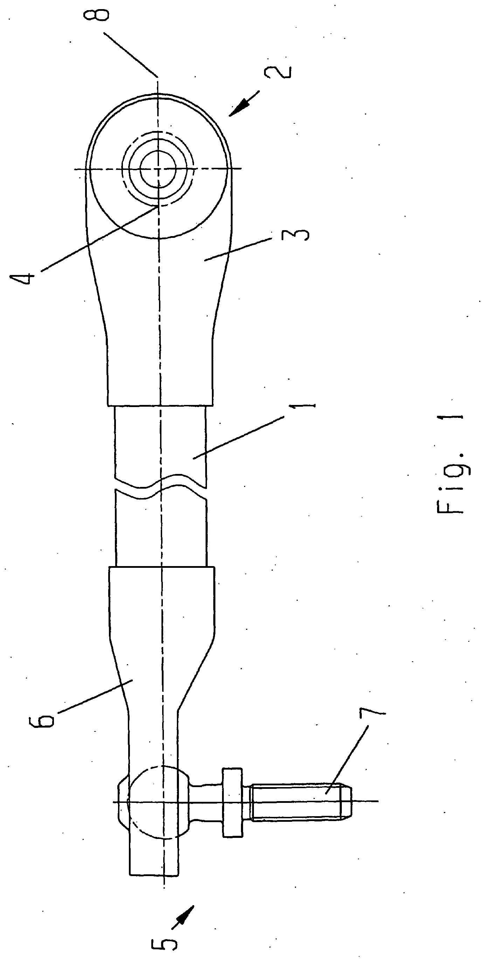

Aus Figur 1 ist eine Ausführungsform des erfindungsgemäßen Verbindungsstücks ersichtlich, wobei an einem langgestreckten Metallkörper 1 aus Aluminium ein erstes Kugelgelenk 2 angeordnet ist. Das Kugelgelenk 2 weist ein Kunststoffgehäuse 3 und einen teilweise in diesem angeordneten Kugelzapfen 4 auf, wobei das Kunststoffgehäuse als einteiliges Kunststoffspritzteil hergestellt ist und den langgestreckten Metallkörper 1 an einem ersten seiner beiden Enden bereichsweise umschließt. Am zweiten Ende des langgestreckten Metallkörpers 1 ist ein zweites Kugelgelenk 5 vorgesehen, das ebenfalls ein Kunststoffgehäuse 6 und einen teilweise in diesem angeordneten Kugelzapfen 7 aufweist. Auch dieses Kunststoffgehäuse 6 ist als einteiliges Kunststoffspritzteil hergestellt, welches den langgestreckten Metallkörper 1 an seinem zweiten Ende bereichsweise umschließt. Wie aus Figur 1 ersichtlich, ist das erste Kugelgelenk 2 ferner gegenüber dem zweiten Kugelgelenk 5 um 90° um die Längsachse 8 des Verbindungsstücks verdreht angeordnet. Die aufgrund der Verdrehung unterschiedliche Ausrichtung der Kugelgelenke bzw. der Kugelzapfen ermöglicht das gelenkige Verbinden von zwei Bauelementen, deren Anschlussstellen für das Verbindungsstück ebenfalls um 90° verdreht angeordnet sind.

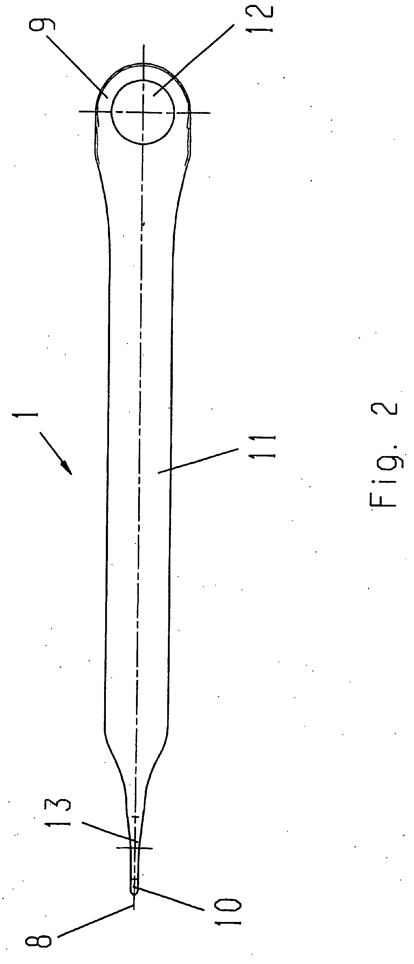

Aus Figur 2 ist der langgestreckte Metallkörper 1 der erfindungsgemäßen Ausführungsform ohne die beiden Kugelgelenke 2 und 5 ersichtlich, wobei der langgestreckte Metallkörper 1 als Rohr ausgebildet und in zwei Endbereiche 9 und 10 sowie in einen zwischen diesen liegenden Mittelbereich 11 unterteilt ist. Die beiden Enden des Rohres 1 sind zum Ausbilden der beiden Endbereiche 9 und 10 zu einem Flachprofil verformt, wodurch das Rohr stirnseitig an beiden Enden materialhomogen vollständig verschlossen ist. Die beiden Flachprofile sind gegeneinander um einen Winkel von 90° um die Längsachse 8 des langgestreckten Metallkörpers 1 verdreht ausgebildet, wobei ferner in jedem der Flachprofile ein Loch 12 bzw. 13 vorgesehen ist. Das Loch 12 durchdringt das dem ersten Endbereich 9 zugeordnete Flachprofil, wodurch eine erste ringförmige Struktur gebildet ist, und das Loch 13 durchdringt das dem zweiten Endbereich 10 zugeordnete Flachprofil, wodurch eine zweite ringförmige Struktur geschaffen ist. Die beiden ringförmigen Strukturen dienen als Verstärkungen der Kunststoffgehäuse 3 und 6.

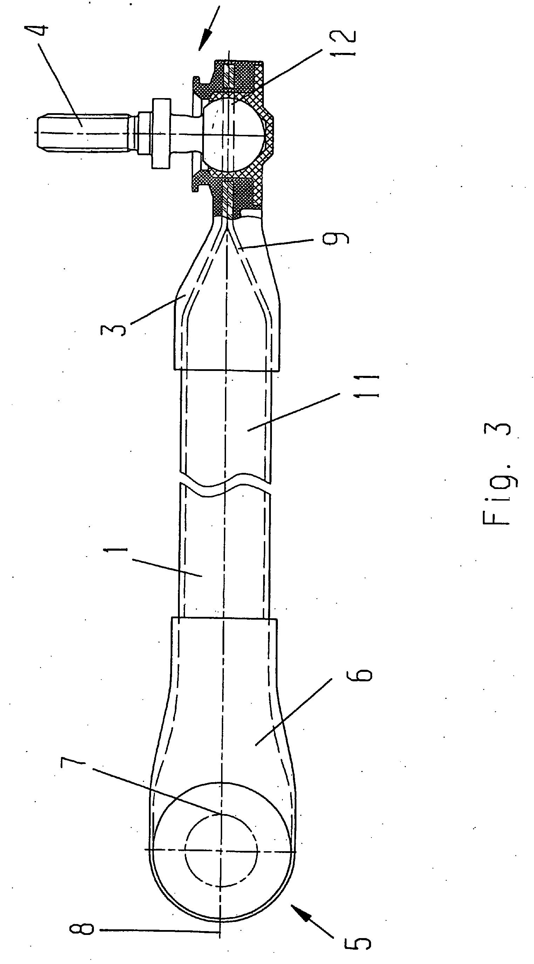

Figur 3 zeigt eine Schnittansicht des ersten Kugelgelenks 2 gemäß der erfindungsgemäßen Ausführungsform. Danach ist die erste ringförmige Struktur in das erste Kunststoffgehäuse 3 eingebettet, wodurch eine formschlüssige Verbindung zwischen dem ersten Kunststoffgehäuse 3 und dem langgestreckten Metallkörper 1 ausgebildet ist.

Ferner ist zur Aufnahme des Kugelzapfens 4 in dem ersten Kunststoffgehäuse 3 eine Ausnehmung bzw. ein Loch vorgesehen, welches von der ersten ringförmigen Struktur umgeben ist. Durch diese Integration der ringförmigen Struktur in das Kunststoffgehäuse 3 ist dessen Stabilität insbesondere in Bezug auf Kräfte erhöht, die parallel zur Längsachse 8 des Verbindungsstücks wirken.

Nach der erfindungsgemäßen Ausführungsform ist das zweite Kugelgelenk 5 in gleicher Weise wie das erste Kugelgelenk 2 aufgebaut.

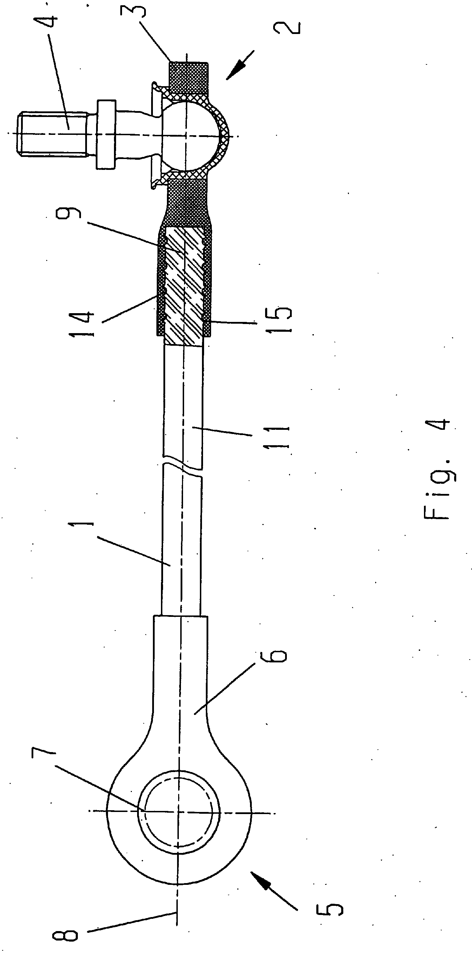

Aus der Figur 4 ist eine zweite, nicht erfindungsgemäße Ausführungsform ersichtlich, wobei gleiche Bezugszeichen gleiche oder funktionsähnliche Merkmale wie bei der erfindungsgemäßen Ausfürungsform bezeichnen. Gemäß dieser Ausführungsform ist ein langgestreckter Metallkörper 1 als massiver Aluminium-Stab ausgebildet, wobei in einem ersten seiner Endbereiche 9 eine Mehrzahl von umlaufenden Nuten 14 und Erhebungen 15 zum Befestigen eines ersten Kugelgelenkes 2 vorgesehen sind.

Das erste Kugelgelenk 2 weist ein Kunststoffgehäuse 3 auf, das durch Umspritzen des ersten Endbereichs 9 ausgebildet ist, wobei das Kunststoffgehäuse 3 über die Nuten 14 und die Erhebungen 15 formschlüssig mit dem langgestreckten Metallkörper verbunden ist. Auch nach der zweiten Ausführungsform ist das zweite Kugelgelenk 5 in gleicher Weise wie das erste Kugelgelenk 2 aufgebaut.

### Bezugszeichenliste:

- 1: langgestreckter Metallkörper
- 2: erstes Kugelgelenk
- 3: erstes Kunststoffgehäuse
- 4: erster Kugelschaft
- 5: zweites Kugelgelenk
- 6: zweites Kunststoffgehäuse
- 7: zweiter Kugelschaft
- 8: Längsachse
- 9: erster Endbereich
- 10: zweiter Enbereich
- 11: Mittelbereich
- 12: erstes Loch
- 13: zweites Loch
- 14: Nut
- 15: Wulst bzw. Erhebung

## Patentansprüche

1. Verbindungsstück zum gelenkigen Verbinden von im Fahrwerk eines Kraftfahrzeuges angeordneten Bauelementen, insbesondere Pendelstütze, welche einerseits mit dem Ende eines Stabilisators und andererseits mit einem diesem Ende zugeordneten Radträger mittelbar oder unmittelbar verbunden ist, mit einem in zwei Endbereiche (9, 10) und in einen zwischen diesen liegenden Mittelbereich (11) unterteilten, lang gestreckten Metallkörper (1), wobei zumindest einer der Endbereiche (9) einen gegenüber dem Mittelbereich (11) wenigstens bereichsweise abweichenden Querschnitt aufweist, und mit einem ein Kunststoffgehäuse (3) aufweisenden Gelenk (2), welches mit dem Endbereich (9) formschlüssig verbunden ist, wobei die formschlüssige Verbindung ausschließlich zwischen der Außenfläche des Endbereichs (9) und dem Kunststoffgehäuse (3) gebildet und der Endbereich (9) stirnseitig vollständig und materialhomogen geschlossen ausgeführt ist,
**dadurch gekennzeichnet, dass**
der lang gestreckte Metallkörper (1) aus einem Rohr hergestellt ist, wobei zumindest ein Ende des Rohres zum Ausbilden des Endbereichs (9) zu einem Flachprofil verformt ist, in welchem ein durchgehendes Loch (12) vorgesehen ist zur Aufnahme des Gelenkes (2).

2. Verbindungsstück nach Anspruch 1,
**dadurch gekennzeichnet, dass**
das Gelenk (2) als Kugelgelenk ausgebildet ist.

3. Verbindungsstück nach einem der Ansprüche 1 oder 2,
**dadurch gekennzeichnet, dass**
das Kunststoffgehäuse (3) als einstückiges Kunststoffspritzteil ausgebildet ist.

4. Verbindungsstück nach einem der Ansprüche 1 bis 3,
**dadurch gekennzeichnet, dass**
beide Endbereiche (9, 10) in gleicher Weise ausgebildet sind und der andere der Endbereiche (10) mit einem ein Kunststoffgehäuse (6) aufweisenden zweiten Gelenk (5) formschlüssig verbunden ist.

5. Verbindungsstück nach den Ansprüchen 1 bis 4,
**dadurch gekennzeichnet, dass**
die den beiden Endbereichen (9, 10) zugeordneten Flachprofile gegeneinander um die Längsachse (8) des langgestreckten Metallkörpers (1) verdreht angeordnet sind.

## Claims

1. Connecting piece for flexibly connecting structural components disposed in the chassis of a motor vehicle, in particular pendulum support, which is indirectly or directly connected on one side to the end of a stabilizer and on the other side to a wheel carrier associated with this end, with an elongate metal body (1) which is divided into two end regions (9, 10) and into a centre region (11) lying between these, wherein at least one of the end regions (9) has a cross section which differs from that of the centre region (11), at least in regions, and with a joint (2),comprising a plastics housing (3), which joint is positively connected to the end region (9), wherein the positive connection is formed solely between the outer face of the end region (9) and the plastics housing (3), and the end region (9) is closed completely and so as to be homogeneous in material terms at the front,
**characterised in that**
the elongate metal body (1) is produced from a tube, wherein at least one end of the tube is shaped to form the end region (9) into a flat profile in which a continuous hole (12) is provided to accommodate the joint (2).

2. Connecting piece according to Claim 1,
**characterised in that**
the joint (2) is formed as a ball-and-socket joint.

3. Connecting piece according to either of Claims 1 and 2,
**characterised in that**
the plastics housing (3) is formed as a one-piece plastics injection moulded part.

4. Connecting piece according to any one of Claims 1 to 3,
**characterised in that**
the two end regions (9, 10) are formed in the same way and the other of the end regions (10) is positively connected to a second joint (5) comprising a plastics housing (6).

5. Connecting piece according to Claims 1 to 4,
**characterised in that**
the flat profiles associated with the two end regions (9, 10) are turned relative to one another about the longitudinal axis (8) of the elongate metal body (1).

## Revendications

1. Pièce d'accouplement destinée à relier de manière articulée des pièces agencées dans le châssis de roulement d'un véhicule automobile, en particulier support pendulaire, qui est assemblé directement ou indirectement, d'une part, avec l'extrémité d'un stabilisateur et, d'autre part, avec un support de roue associé à cette extrémité, comportant un corps métallique allongé (1), séparé en deux zones d'extrémité (9, 10) et en une zone centrale (11) située entre ces dernières, au moins une des zones d'extrémité (9) ayant une section qui au moins par zones est différente de celle de la zone centrale (11), et comportant une articulation (2), qui comporte un boîtier en matière plastique (3) et qui est assemblée par conjugaison de forme avec la zone d'extrémité (9), l'assemblage par conjugaison de forme étant formé exclusivement entre la face extérieure de la zone d'extrémité (9) et le boîtier en matière plastique (3), et la zone d'extrémité (9), du côté frontal, étant fermée complètement et de manière homogène du point de vue du matériau,
**caractérisée en ce que**
le corps métallique allongé (1) est formé par un tube, au moins une extrémité du tube étant déformée en profilé plat pour former la zone d'extrémité (9) dans laquelle est prévu un trou débouchant (12) destiné à recevoir l'articulation (2).

2. Pièce d'accouplement selon la revendication 1, **caractérisée en ce que** l'articulation (2) est réalisée sous forme d'articulation à rotule.

3. Pièce d'accouplement selon la revendication 1 ou 2, **caractérisée en ce que** le boîtier en matière plastique (3) est réalisé sous forme de pièce d'un seul tenant moulée par injection.

4. Pièce d'accouplement selon l'une quelconque des revendications 1 à 3, **caractérisée en ce que** les deux zones d'extrémité (9, 10) sont réalisées de manière identique, et l'autre zone d'extrémité (10) est assemblée par conjugaison de forme avec une deuxième articulation (5) munie d'un boîtier en matière plastique (6).

5. Pièce d'accouplement selon l'une quelconque des revendications 1 à 4, **caractérisée en ce que** les profilés plats associés aux deux zones d'extrémité (9, 10) sont décalés angulairement l'un par rapport à l'autre autour de l'axe longitudinal (8) du corps métallique allongé (1).
